# EUROPÄISCHE PATENTSCHRIFT

(11) **EP 1 105 860 B1**
(45) Veröffentlichungstag und Bekanntmachung des Hinweises auf die Patenterteilung: **16.04.2003**
(21) Anmeldenummer: 99950467.3
(22) Anmeldetag: 28.07.1999
(51) Int. Cl.: G09F 19/22, B65G 17/06

(54) **STETIGFÖRDERER, INSBESONDERE GEPÄCKFÖRDERER**
CONTINUOUS CONVEYOR, ESPECIALLY BAGGAGE CONVEYOR
CONVOYEUR CONTINU DESTINE NOTAMMENT AUX BAGAGES

(30) Priorität: 17.08.1998 DE 19836951
(43) Veröffentlichungstag der Anmeldung: 13.06.2001
(73) Patentinhaber: Wayer, Harald M., 69168 Wiesloch (DE)
(72) Erfinder: Wayer, Harald M., 69168 Wiesloch (DE)
(74) Vertreter: Rudolph, Ulrike, Dr.
(86) Internationale Anmeldenummer: DE9902344
(87) Internationale Veröffentlichungsnummer: WO00011641

(56) Entgegenhaltungen:
- DE-A- 19 649 746
- US-A- 5 330 044
- US-A- 5 427 227

## Beschreibung

Die Erfindung betrifft einen Stetigförderer, insbesondere einen Gepäckförderer, mit endlosem Tragorgan für den Transport von Gegenständen und/oder Personen insbesondere in Räumen oder auf Geländen, die einem begrenzten oder unbegrenzten, wechselnden Personenkreis zugänglich sind, wie z.B. die Gepäckförderer in Flughäfen.

Solche Stetigförderer, d.h. Fördermittel, bei denen sich das Tragorgan, das Fördergut (Gegenstände und/oder Personen) auf einem festgelegten Transportweg von der Aufgabe- zur Abgabestelle und in vielen Fällen auch wieder zurück (Rundförderweg) kontinuierlich bewegt, und ganz besonders die Gepäckförderer/Gepäckfördermittel in der Gepäckausgabestelle von Flughäfen, werden tagtäglich von einer Vielzahl von Personen beobachtet ― nämlich dann, wenn diese Personen auf ganz bestimmte zu befördernde Güter ― beispielsweise ihre persönlichen Gepäckstücke ― warten, die ihnen mittels des betreffenden Förderers/Fördermittels zugeführt werden.

Diese Warte- bzw. Beobachtungszeit verstreicht in aller Regel ohne besonderen Nutzen für irgend jemanden und wird von den betreffenden Personen im allgemeinen als langweilig empfunden.

Andererseits besteht auf dem Werbesektor immer wieder das Problem, Werbeflächen Werbeobjekte und Werbezeit zu finden, mit dem bzw. in der die Aufmerksamkeit eines möglichst großen und breit gefächerten Personenkreis geweckt und angezogen werden kann.

Aus der DE 196 49 746 A1 (Mohr) ist ein Stetigförderer mit einem Förderband aus Förderbandsegmenten bekannt, bei dem wenigstens ein Förderbandsegment eine "optische Information" wie beispielsweise eine Werbung aufweist. Die "optische Information"/Werbung ist integraler Bestandteil des Förderbandsegments, d.h. eines Tragorgan-Abschnitts. Sie ist entweder direkt auf das Förderbandsegement bzw. den Tragorgan-Abschnitt aufgebracht ( z.B. aufvulkanisiert, eingarviert, eingeätzt, erodiert), so daß das Tragorgan selbst der Werbeträger ist, oder sie ist in einer Ausnehmung des Förderbandsegments bzw. Tragorgans angeordnet und wird von einem Abdeckteil bedeckt, das wenig unterhalb oder bündig mit der Tragorgan-Oberflächenebene abschließt. In letzterem Fall ist die Werbung entweder auf einer Folie aufgebracht, die in der Ausnehmung des Tragorgans liegt und von der Abdeckung bedeckt wird, d.h. die Folie ist der Werbeträger und die Kombination Ausnehmung und Abdeckteil ist die Haltevorrichtung für diesen Werbeträger, oder die optische Information /Werbung ist auf dem Abdeckteil selbst angeordnet, so daß das Abdeckteil der Werbeträger ist und die Ausnehmung des Tragorgans die Haltevorrichtung fiir diesen Werbeträger darstellt. Dieser bekannte Stetigförderer mit integrierter Werbefläche hat jedoch den Nachteil, daß die Werbung häufig von den auf dem Tragorgan transportierten Gepäckstücken oder sonstigen Objekten verdeckt ist, und grundsätzlich nur von denjenigen Beobachtern des Förderbands gesehen werden kann, die so nahe an dem Stetigförderer stehen, daß sie das Tragorgan unter einem relativ großen Blickwinkel beobachten können.

Der vorliegenden Erfindung liegt die Aufgabe zugrunde, einen Stetigförderer für Gegenstände und/oder Personen bereitzustellen, der wenigstens einen Werbeträger aufweist, und bei dem die aufgezeigten Nachteile des Stand der Technik vermieden sind.

Diese Aufgabe wird mit einem Stetigförderer der eingangs genannten Art gelöst, der sich dadurch auszeichnet, daß er ein Tragorgan aufweist, das in einem oder mehreren seiner Längsabschnitt(e), d.h. an einer oder an mehreren, in Längsrichtung hintereinander befindlichen Stellen, jeweils wenigstens eine Haltevorrichtung aufweist, an der bzw. an denen wenigstens ein Werbeträger befestigt ist, der die Oberflächenebene des Tragorgans überragt, d.h. der sich in den Raum oberhalb der Oberflächenebene des Tragorgans erstreckt und somit eine Position zwischen den dort gegebenenfalls befindlichen zu transportierenden Gegenständen oder Personen einnimmt.

Alle Personen, die den Förderer beobachten, weil sie auf ein Fördergut warten, das mit diesem Fördere angeliefert wird, sehen zwangsläufig während ihrer Wartezeit die vorbeibewegten Werbeträger und registrieren nach der allgemeinen Lebenserfahrung zumindest unbewußt die Werbeaussage, die diese Werbeträger vermitteln wollen.
Damit liefert der erfindungsgemäße Stetigförderer einen Werbeträger, der sich vor allem dadurch auszeichnet, daß er in einem Blickfeld der angesprochenen Verkehrskreise liegt, das praktisch ständig mit Aufinerksamkeit wahrgenommen wird.

Bei einer bevorzugten Ausrührungsform des erfindungsgemäßen Stetigförderers ist das Tragorgan ein Gurt, ein Band oder ein Plattenband. Diese Art von Stetigfärderer ist vor allem in der Gepäckbeförderung weit verbreitet ― z.B. als Wandertisch oder als beliebig kurven-, berg- und talreiche Rundwander- bzw. Rundförderstrecke ―, und an dem Gurt, dem Band und vor allem dem Plattenband läßt bzw. lassen sich die Haltevorrichtung(en) fiir den/die Werbeträger problemlos befestigen, gegebenenfalls auch im Zuge einer Nachrüstung bereits vorhandener (installierter) Förderer. Insbesondere bei Plattenbandförderern ist eine Nachrüstung durch den Austausch einzelner Platten bzw. Lamellen der herkömmlichen Art gegen Platten bzw. Lamellen, die mit einer erfindungsgemäßen Haltevorrichtung versehen sind, technisch ohne weiteres möglich.

Die Haltevorrichtung(en) sind vorzugsweise an der Oberseite bzw. Oberfläche des Tragorgans angeordnet und beeinträchtigen damit weder den Antrieb noch die Vorwärtsoder auch Rückwärtsbewegung des Tragorgans, noch einen Hohlweg- oder Tunnelverlauf (z.B. zwischen eng benachbart liegenden Begrenzungswänden oder durch die Röntgenstation hindurch)

In einer bevorzugten Ausführungsvariante ist bzw. sind die Haltevorrichtung(en) im Randbereich, d.h. entlang eines oder beider Längsränder des Tragorgans angeordnet.

Das hat den Vorteil, daß in diesem Längsabschnitt des Tragorgans zumindest der Mittelbereich nach wie vor für den Transport von Gütern und/oder Personen zur Verfügung steht.

Die Haltevorrichtung(en) umfassen vorzugsweise Rast- und/oder Verankerungsmittel, an denen der Werbeträger mit Bewegungsspiel in einer Ebene parallel zur Förderebene und/oder senkrecht dazu und/oder schräg, d.h. im Winkel zur Förderebene, befestigt werden kann. Eine Verrastung oder Verankerung mit Bewegungsspiel in einer Ebene parallel zur Förderebene, beispielsweise mittels Kugel- oder Deichselgelenk(en), gewährleistet, daß der betreffende Werbeträger in bzw. parallel zur Förderebene drehbar ist und infolgedessen unabhängig von seinen Abmessungen in Richtung der Längsachse des Tragorgans auch Kurvenbewegungen dieses Tragorgans problemlos folgen kann. Die― vorzugsweise zusätzliche ― Verwendung von Rast- und/oder Verankerungsmitteln mit Bewegungsspielraum senkrecht und/oder schräg (im Winkel) zur Förderebene ,beispielsweise in Gestalt von Feder(element)verbindungen, schafft die Voraussetzungen dafür, daß der Werbeträger auch einem Berg- und Talverlauf der Förderstrecke ohne Schwierigkeiten folgen kann.
Die Feder(element)verbindungen können ― bei Bedarf auch kombiniert mit zusätzlichen (einfachen) Druckfedern (insbesondere Schraubenfedern) ― in einer oder mehreren Ebenen derart angeordnet sein, daß sie in der/den betreffenden Ebene(n) (jeweils) eine Puffer- bzw. Knautschzone darstellen. Diese Püffer- bzw. Knautschzone schützt die Haltevorrichtung, den daran bzw. darin gehaltenen Werbeträger und auch die die Haltevorrichtung tragende(n) Platte(n)/Lamelle(n) 4 vor Schlag und Druckeinwirkungen, wie sie beispielsweise beim Draufwerfen von Gepäckstücken auf den Stetigförderer auftreten können.

Die Haltemittel sollten mit Sicherheitsmitteln gegen unbeabsichtigtes und/oder unbefugtes Öffnen bzw. Lösen ausgestattet sein.

Die Transportoberfläche des werbenden Stetigförderers, insbesondere das Tragorgan selbst oder dessen Oberfläche, kann horizontal, schräg oder halbschräg im Raum angeordnet sein.

Als Werbeträger kommen insbesondere sowohl Werbetafeln als auch Realformen (d.h. die "richtigen", "echten" Gebrauchsformen) oder Attrappen eines Koffers, einer Reisetasche, eines Rucksacks, eines anderen üblichen oder auch unüblichen Gepäckstücks in Betracht.

Der Werbeträger kann aber auch ohne weiteres das beworbene Objekt selbst sein, wenn dieses auf dem betreffenden Förderer bzw. Förderorgan transportierbar ist.

Es besteht die Möglichkeit, den Werbeträger oder Teile desselben über einen oder mehrere an der Bandoberfläche mitlaufende(n) Dynamo(s) oder über Kontaktschleifen oder über Batterien o.ä. beleuchtbar zu machen.

Außerdem kann der Werbeträger mit wenigstens einem Sprechmodul oder ähnlichen Mitteln zur Spracherzeugung ausgerüstet sein und damit bei Bedarf "zum Sprechen gebracht" werden.

Der Werbeträger kann durch Gelenkmechanismen beweglich und/oder gezielt bewegbar auf dem Stetigförderer montiert sein. Die Auslösung und Steuerung der Bewegung kann beispielsweise mit Hilfe von Antriebskontakten erfolgen, die zwischen den Gelenkmechanismen und der laufenden Förderbandoberfläche ausgebildet sind.

Je nach Größe des Werbeträgers kann dessen Haltevorrichtung an einer oder mehreren Transportplatten/Transportlamellen/Tragorganelement befestigt sein. Die Befestigung an mehreren Transportplatten/Transportlamellen/Tragorganelement erfolgt vorzugsweise mittels eines Gelenkadapters.

Die Erfindung wird im folgenden anhand von in den Zeichnungen dargestellten Ausführungsbeispielen näher erläutert. Es zeigen
- Fig. 1:: die perspektivische Ansicht eines erfindungsgemäßen Plattenförderers mit Haltevorrichtung und Werbeträger,
- Fig. 2:: die Detailansicht der Haltevorrichtung mit Werbeträger gemäß Fig. 1,
- Fig. 3:: einen Schnitt durch die Haltevorrichtung gemäß Fig. 2 in der Bildebene, und gemäß Fig. 4 von III nach III (senkrecht zur Bildebene), und
- Fig. 4:: die Ansicht einer Haltevorrichtung gemäß Fig. 1 und Fig.2 von unten
- Fig. 5:: eine Ausführungsform mit schräger Anordnung der Bandoberfläche

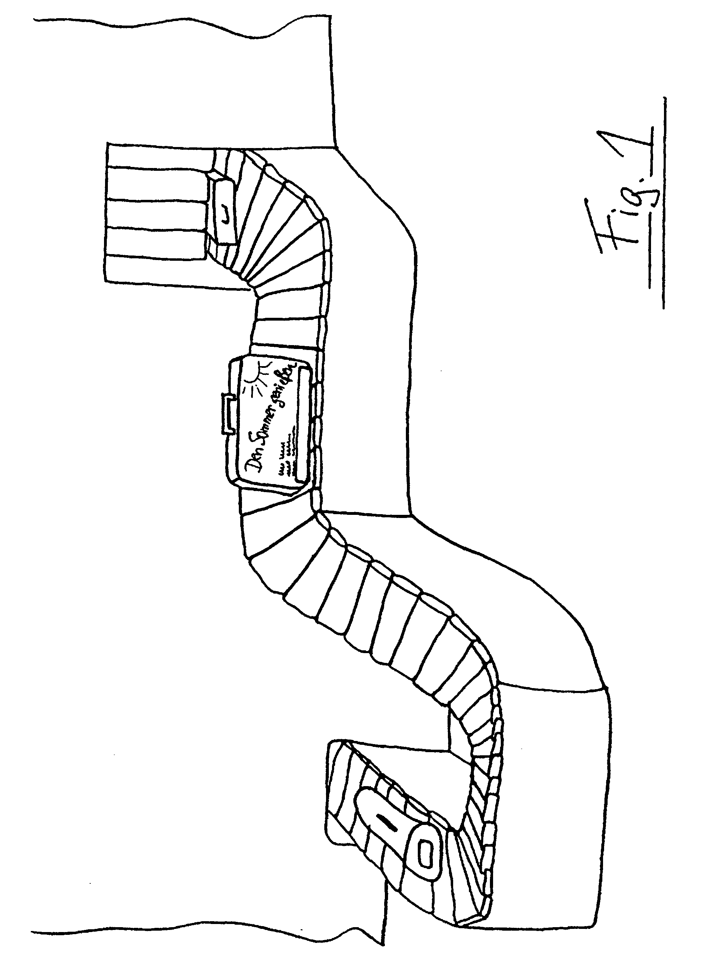

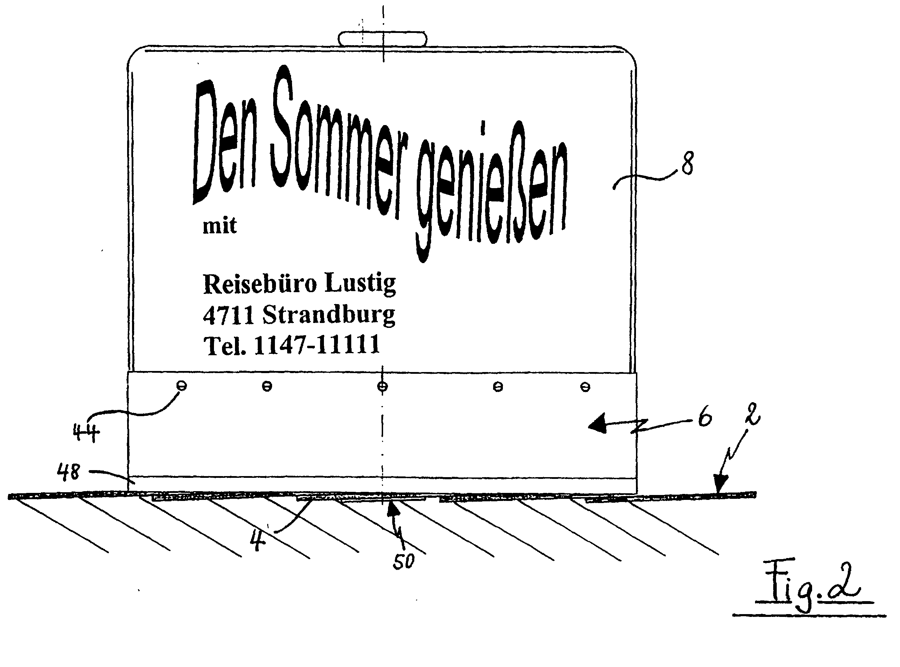

In Fig. 1 ist ein typischer Gepäckförderer dargestellt, wie er vor allem von Gepäckausgabestellen in Flughäfen allgemein bekannt ist. Der Gepäckförderer weist als Tragorgan ein sog. Plattenband 2 auf, das aus gleichartigen, rechteckigen flachen Platten 4 bzw. Lamellen 4 besteht, die in Bandlängsrichtung hintereinander Angeordnet sind, wobei ihre Längsseiten quer zur Bandlängsrichtung verlaufen. Der hier ― und in Fig. 2 vergrößert ― dargestellte Abschnitt des Plattenbands 2 weist eine Haltevorrichtung 6 für einen Werbeträger 8 auf, die entlang der dem Beobachter des Plattenbandes 2 zugewandten Längsseite 10 desselben angeordnet ist. Bei dem Werbeträger 8 selbst handelt es sich hier ― beipielhaft ― um die Originalausführung eines Reisekoffers, der auf seiner Oberseite mit einem Werbeschriftzug versehen ist.

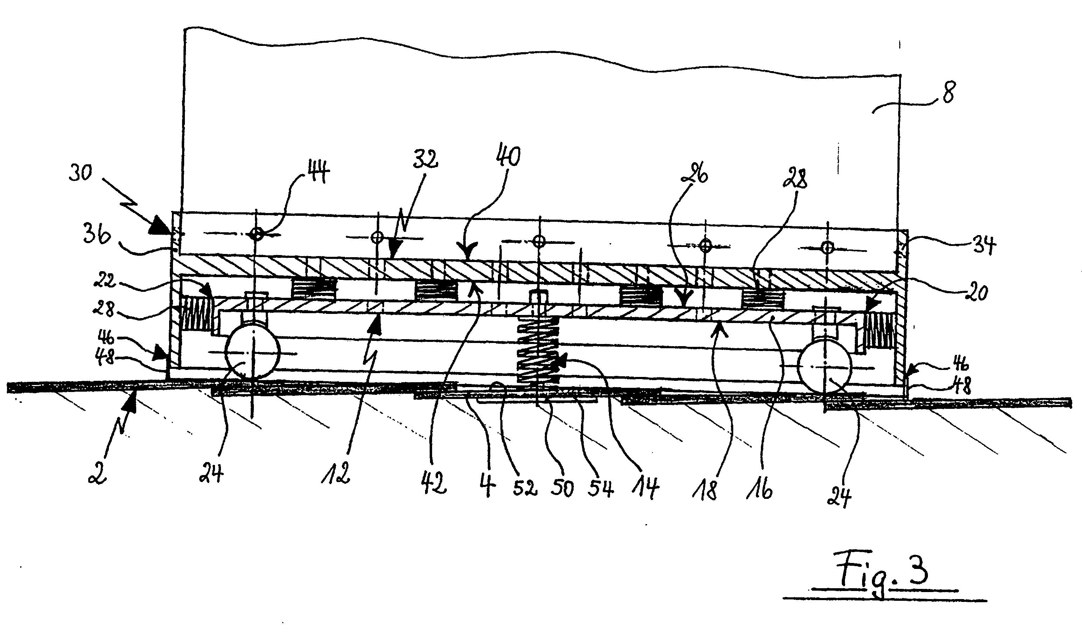

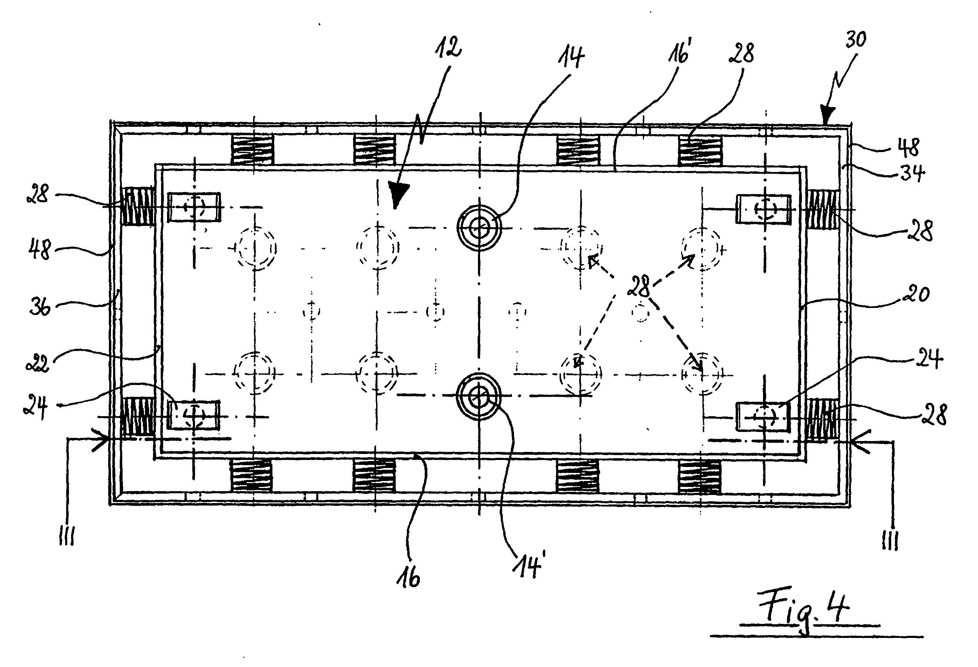

In den Fig. 3 und 4 ist der Aufbau der Haltevorrichtung 6 dieses Ausführungsbeispiels näher dargestellt. Die Haltevorrichtung 6 umfaßt eine im Grundriß rechteckige Bodenplatte 12, die mittels zwei Ferderverbindungselementen 14, 14' an einer Platte/Lamelle 4 des Plattenbands 2 verankert ist. Die Bodenplatte 12 ist so orientiert, daß ihre Längsseiten 16, 16' quer zu den Längsseiten 10, 10' der Platten/Lamellen 4 des Plattenbands 2 verlaufen (vgl. Fig. 1).
Die zwei Federverbindungselemente 14, 14' sind einerseits an der Unterseite 18 der Bodenplatte 12 annähernd mittig, d.h. etwa auf der Höhe der Längsseitenhalbierenden, und in nahezu spiegelbildlicher Anordnung zueinander in nicht näher dargestellter Weise befestigt. Andererseits sind die Federverbindungselemente 14, 14' an der Platte/Lamelle 4 in einer Basisvorrichtung 50 fixiert, die sich von der Oberseite 52 durch die Platte/Lamelle 4 hindurch bis an die Unterseite 54 derselben erstreckt und dort festgelegt ist.
Ebenfalls an der Unterseite 18 der Bodenplatte 12, allerdings in den einander gegenüberliegenden Randbereichen der beiden kurzen Seiten, d.h. der Vorderseite 20 und der Rückseite 22, sind jeweils zwei Laufrollen 24 angeordnet, die die Vorderseite 20 und die Rückseite 22 gegen das Plattenband 2 abstützen. An den Stirnkanten von Vorderseite 20, Rückseite 22 und Längsseiten 16, 16' und ebenso an der Oberseite 26 der Bodenplatte 2 sind mehrere Stoßfedern 28 vorgesehen, die die Bodenplatte 2 federnd gegen eine Trag(rahmen)konstruktion 30 für den Werbeträger 8 abstützen.
Diese Trag(rahmen)struktion 30 besteht aus einer Auflagefläche 32, die gegenüber der Bodenplatte 12 Übermaß in Länge und Breite aufweist, sowie einer Vorderwand 34, einer Rückwand 36 und zwei Seitenwänden 38, 38', die die Auflagefläche 32 an ihrer Oberseite 40 und Unterseite 42 rahmenartig überkragen.
An den die Oberseite 40 überkragenden Wandabschnitten sind Bohrlöcher mit Befestigungsschrauben 44 vorgesehen, mit denen der Werbeträger 8 an bzw. in dieser Trag(rahmen)konstruktion 30 wegnahmesicher befestigt werden kann.
In dem hier dargestellten Ausführungsbeispiel ist die Trag(rahmen)struktion 30 zudem an ihrer Rückwand 36 und ihrer Vorderwand 34, jeweils an den dem Plattenband 2 zugewandten, unteren Kantenbereich 46 mit einer Gummilippe 48 versehen, die als Verletzungsschutz im laufenden Betrieb dient.

Die Federn 28 und die Federn der Federverbindungselemente 14, 14' in einer Anordnung gleich oder ähnlich derjenigen des vorliegenden Ausführungsbeispiels stellen eine Puffer- bzw. Knautschzone dar, die sowohl die Haltevorrichtung 6 als auch den daran bzw. darin gehaltenen Werbeträger 8 und ebenso die die Haltevorrichtung 6 tragende(n) Platte(n)/Lamelle(n) 4 vor Schlag und Druckeinwirkungen schützt, wie sie beispielsweise beim Draufwerfen von Gepäckstücken auf den Stetigförderer auftreten können.

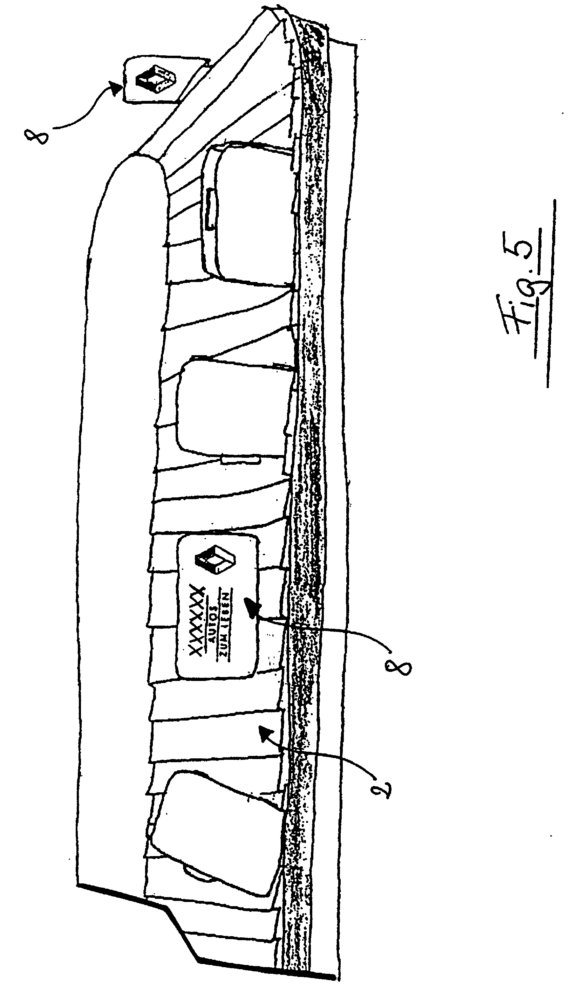

In Fig. 5 ist eine Ausführungsform des erfindungsgemäßen Stetigfördereres mit schräger Anordnung des Tragorgans, hier eines Plattenbands 2 dargestellt. Die Transportoberfläche, d.h. insbesondere die Oberfläche der einzelnen Platten/Lamellen des Plattenbands 2 des werbenden Stetigförderers, insbesondere das Tragorgan selbst oder dessen Oberfläche, ist hier schräg im Raum angeordnet, und die Werbeträger 8, hier Realformen von Koffern mit aufgedrucktem Werbeschriftzug, sind derart an der/den Haltevorrichtung(en) des Tragorgans befestigt, daß sie aufrecht oder nahezu aufrecht transportiert werden und damit optimal sichtbar bzw. beobachtbar sind.

Es versteht sich von selbst, daß diese Ausführungsformen der Erfindung nur Beispiele darstellt, und daß der erfindungsgemäße Stetigförderer und insbesondere die daran befestigte, erfindungsgemäße Haltevorrichtung für den oder die Werbeträger auch eine andere Detailkonstruktion aufweisen kann.

### Bezugszeichen

- 2: Plattenband
- 4: Platte / Lamelle
- 6: Haltevorrichtung
- 8: Werbeträger
- 10: Längsseite d. Platte/Lamelle
- 12: Bodenplatte
- 14: Federverbindungselement
- 16: Längsseite d. Bodenplatte
- 18: Unterseite d. Bodenplatte
- 20: Vorderseite d. Bodenplatte
- 22: Rückseite d. Bodenplatte
- 24: Laufrolle
- 26: Oberseite d. Bodenplatte
- 28: Stoßfeder
- 30: Trag(rahmen)konstruktion
- 32: Auflagefläche
- 34: Vorderwand
- 36: Rückwand
- 38: Seitenwand
- 40: Oberseite d. Auflagefläche
- 42: Unterseite d. Auflagefläche
- 44: Befestigungsschraube
- 46: Randkantenbereich
- 48: Gummilippe
- 50: Basisverankerung
- 52: Oberseite d. Platte/Lamelle
- 54: Unterseite d. Platte/Lamelle

## Patentansprüche

1. Stetigförderer mit endlosem Tragorgan (2) für den Transport von Gegenständen und/oder Personen, bei dem das Tragorgan in einem oder mehreren Längsabschnitt(en) jeweils wenigstens eine Haltevorrichtung (30) aufweist, an der/denen wenigstens ein Werbeträger (8) befestigt ist, der die Oberflächenebene (52) des Tragorgans (2) überragt.

2. Stetigförderer nach Anspruch 1, **dadurch gekennzeichnet,**
**daß** das Tragorgan ein Gurt, ein Band oder ein Plattenband (2) ist.

3. Stetigförderer nach Anspruch 1 oder 2, **dadurch gekennzeichnet,**
**daß** die Haltevorrichtung(en) an der Oberseite/Oberfläche des Tragorgans angeordnet ist/sind.

4. Stetigförderer nach einem der Ansprüche 1 bis 3, **dadurch gekennzeichnet,**
**daß** die Haltevorrichtung(en) in einem oder beiden Längsrandbereich(en) des Tragorgans angeordnet ist/sind.

5. Stetigförderer nach einem der Ansprüche 1 bis 4, **dadurch gekennzeichnet,**
**daß** die Haltevorrichtung(en) Rast- und/oder Verankerungsmittel (50) umfaßt, die Bewegungsspiel in einer Ebene parallel zur Förderebene und/oder senkrecht und/oder in einem Winkel zur Förderebene aufweisen.

6. Stetigförderer nach Anspruch 5, **dadurch gekennzeichnet,**
**daß** das/die Rast- und/oder Verankerungsmittel als Kugelgelenk(e) und/oder Deichselgelenk(e) und/oder Federelement(e) (14) realisiert ist/sind.

7. Stetigförderer nach einem der Ansprüche 1 bis 6, **dadurch gekennzeichnet,**
**daß** die Haltevorrichtung(en) mit Sicherheitsmitteln gegen unbeabsichtigtes und/oder unbefugtes Öffnen bzw. Lösen ausgestattet ist/sind.

8. Stetigförderer nach einem der Ansprüche 1 bis 7 **dadurch gekennzeichnet,**
**daß** die Haltevorrichtung(en) Feder(element)e umfaßt(umfassen), die in einer oder mehreren Ebenen zu einer Puffer- bzw. Knautschzone angeordnet sind.

9. Stetigförderer nach einem der Ansprüche 1 bis 8, **dadurch gekennzeichnet,**
**daß** der Werbeträger eine Werbetafel ist.

10. Stetigförderer nach einem der Ansprüche 1 bis 9, **dadurch gekennzeichnet,**
**daß** der Werbeträger die Realform oder Attrappe eines Koffers, einer Reisetasche, eines Rucksacks oder eines ähnlichen üblichen Gepäckstücks ist.

11. Stetigförderer nach einem der Ansprüche 1 bis 10, **dadurch gekennzeichnet,**
**daß** der Werbeträger das beworbene Objekt selbst ist.

12. Stetigförderer nach einem der Ansprüche 1 bis 11, **dadurch gekennzeichnet,**
**daß** die Transportoberfläche des werbenden Stetigförderers, insbesondere das Tragorgan selbst oder dessen Oberfläche, horizontal, schräg oder halbschräg im Raum angeordnet ist.

13. Stetigförderer nach einem der Ansprüche 1 bis 12, **dadurch gekennzeichnet,**
**daß** der Werbeträger durch Gelenkmechanismen beweglich und/oder mittels Steuerung gezielt bewegbar auf dem Stetigförderer montiert ist.

14. Stetigförderer nach einem der Ansprüche 1 bis 13, **dadurch gekennzeichnet,**
**daß** der Werbeträger oder Teile desselben über einen oder mehrere an der Bandoberfläche mitlaufende(n) Dynamo(s) oder über Kontaktschleifen oder über Batterien o.ä. beleuchtbar ist.

15. Stetigförderer nach einem der Ansprüche 1 bis 14, **dadurch gekennzeichnet,**
**daß** die Haltevorrichtung an einer oder mehreren Transportplatten/Transportlamellen /Tragorganelement, vorzugsweise mittels eines Gelenkadapters, befestigt ist.

## Claims

1. Steady-flow conveyor with continuous load carrier for the transport of objects and/or persons, wherein the load carrier, in one or several of its longitudinal sections, is provided with at least one holding device to which at least one advertising medium is attached, said advertising medium towering above the surface plane of the load carrier.

2. Steady-flow conveyor according to claim 1, **characterised in that** the load carrier is a belt, a band or a plate band.

3. Steady-flow conveyor according to claim 1 or 2, **characterised in that** the holding device(s) is(are) arranged at the top side/surface of the load carrier.

4. Steady-flow conveyor according to any one of claims 1 to 3, **characterised in that** the holding device(s) is(are) arranged in one or both longitudinal marginal areas of the load carrier.

5. Steady-flow conveyor according to any one of claims 1 to 4, **characterised in that** the holding device(s) comprise locking or anchoring facilities which enable free motion at a plane parallel to the plane of conveyance and/or perpendicular and/or at an angle to a plane of conveyance.

6. Steady-flow conveyor according to claim 5, **characterised in that** the locking or anchoring facilities are realised as ball-and-socket joint(s) and/or walk-along joint(s) and/or spring elements.

7. Steady-flow conveyor according to any one of claims 1 to 6, **characterised by** the feature that the holding device(s) is(are) provided with safety appliances against unintentional and/or unauthorised opening or removal.

8. Steady-flow conveyor according to any one of claims 1 to 7, **characterised in that** the holding device(s) comprises(comprise) spring(element)s which are arranged in one or several planes thus forming a buffer or crusher zone.

9. Steady-flow conveyor according any one of claims 1 to 8, **characterised in that** the advertising medium is an advertising board.

10. Steady-flow conveyor according to any one of claims 1 to 9, **characterised by** the feature that the advertising medium is the real shape or mock-up of a suitcase, a travelling bag, a knapsack or any other customary item of luggage.

11. Steady-flow conveyor according to any one of claims 1 to 10, **characterised in that** the advertising medium is the advertised object itself.

12. Steady-flow conveyor according to any one of claims 1 to 11, **characterised in that** the top load-bearing plane of the advertising continuous conveyors, in particular the load carrier itself or its surface, is arranged horizontally, slantingly or half-slantingly.

13. Steady-flow conveyor according to any one of claims 1 to 12, **characterised in that** the advertising carrier is erected, movable by means of hinge joint mechanism and/or specifically movable by means of a control system, on the steady-flow conveyor.

14. Continuous conveyor according to any one of claims 1 to 13, **characterised in that** the advertising carrier /advertising medium or parts from that may be illuminated by means of one or more spinning dynamo(s), contact loop(s), battery(batteries) or by similar means running in parallel at the load carrier surface.

15. Continuous conveyor according to any one of claims 1 to 14, **characterised in that** the holding device is fixed at one or more transport plates / transport lamellas / load carrier elements, said fixation being preferably performed by the help of a joint adapter.

## Revendications

1. Convoyeur continu avec un organe porteur sans fin pour le transport d'objets et/ou de personnes dans lequel une ou plusieurs sections longitudinales de l'organe porteur est/sont munie(s) chacune d'au moins un dispositif support sur lequel/lesquels est fixé au moins un support publicitaire qui dépasse le plan de la surface de l'organe porteur.

2. Convoyeur continu selon la revendication 1, **caractérisé en ce que** l'organe porteur est une courroie, une bande ou une bande transporteuse à plateaux.

3. Convoyeur continu selon la revendication 1 ou 2, **caractérisé en ce que** le/les dispositif(s) support est/sont disposé(s) sur la partie supérieure / la surface supérieure de l'organe porteur.

4. Convoyeur continu selon l'une des revendications 1 à 3, **caractérisé en ce que** le/les dispositifs support est/sont disposé(s) sur une ou sur les deux section(s) périphérique(s) longitudinale(s) de l'organe porteur.

5. Convoyeur continu selon l'une des revendications 1 à 4, **caractérisé en ce que** le/les dispositif(s) support contient/contiennent des moyens d'encliquetage et / ou d'ancrage qui présentent un jeu de mouvement dans un plan parallèle au plan du convoyeur et/ou perpendiculaire et/ou incliné par rapport au plan du convoyeur.

6. Convoyeur continu selon la revendication 5, **caractérisé en ce que** les moyens d'encliquetage et / ou d'ancrage sont réalisés sous forme d'articulation(s) à rotule et / ou d'articulation(s) à timon et/ou d'élément(s) ressort.

7. Convoyeur continu selon l'une des revendications 1 à 6, **caractérisé en ce que** le/les dispositifs support est/sont équipé(s) des moyens de sécurité contre l'ouverture inopinée et/ou non autorisée ou le détachement.

8. Convoyeurs continus selon l'une des revendications 1 à 7, **caractérisé en ce que** le/les dispositif(s) support contient/contiennent des ressorts / éléments ressort qui sont disposés dans un ou plusieurs plan(s) en formant une zone tampon ou une zone déformable.

9. Convoyeur continu selon l'une des revendications 1 à 8, **caractérisé en ce que** le support publicitaire est une planche publicitaire.

10. Convoyeur continu selon l'une des revendications 1 à 9, **caractérisé en ce que** le support publicitaire a la forme réelle ou est une représentation factice d'une valise, d'un sac de voyage, d'un sac à dos ou d'un bagage usuel semblable.

11. Convoyeur continu selon l'une des revendications 1 à 10, **caractérisé en ce que** le support publicitaire est l'objet même pour lequel la publicité est faite.

12. Convoyeur continu selon l'une des revendications 1 à 11, **caractérisé en ce que** la surface de transport du convoyeur continu faisant de la publicité, en particulier l'organe porteur même ou sa surface, est disposée horizontalement, inclinée ou semi-inclinée dans l'espace.

13. Convoyeur continu selon l'une des revendications 1 à 12, **caractérisé en ce que** le support publicitaire est monté sur le convoyeur continu à l'aide de mécanismes articulés de sorte à être mobile et/ou à pouvoir être bougé de façon ciblée au moyen d'une commande.

14. Convoyeur continu selon l'une des revendications 1 à 13, **caractérisé en ce que** le support publicitaire ou des parties de celui-ci peut/peuvent être éclairé(es) à l'aide d'une ou plusieurs dynamo(s) se déplaçant également sur la surface de la bande ou à l'aide de boucles de contact ou de batteries ou d'autres dispositifs similaires.

15. Convoyeur continu selon l'une des revendications 1 à 14, **caractérisé en ce que** le dispositif support est fixé à un ou à plusieurs plateau(x) de transport / une ou plusieurs lamelle(s) de transport / un ou plusieurs élément(s) de l'organe porteur, de préférence au moyen d'un adaptateur articulé.
